# EUROPÄISCHE PATENTSCHRIFT

(11) **EP 1 285 172 B1**
(45) Veröffentlichungstag und Bekanntmachung des Hinweises auf die Patenterteilung: **27.10.2004**
(21) Anmeldenummer: 01902240.9
(22) Anmeldetag: 14.02.2001
(51) Int. Cl.: F16B 13/00

(54) **GEWINDEFURCHENDER, HÜLSENFÖRMIGER SCHRAUBDÜBEL**
SELF-TAPPING BUSH-SHAPED SCREWED INSERT
CHEVILLE DE VISSAGE EN FORME DE DOUILLE SERVANT A TARAUDER

(30) Priorität: 19.05.2000 CH 100900
(43) Veröffentlichungstag der Anmeldung: 26.02.2003
(73) Patentinhaber: Pama Reiter Stefan, 9485 Nendeln (LI)
(72) Erfinder: REITER, Stefan, FL-9485 Nendeln (LI)
(74) Vertreter: Schreiber, Wolfgang F.
(86) Internationale Anmeldenummer: PCT/CH2001/000100
(87) Internationale Veröffentlichungsnummer: WO 2001/088387

(56) Entgegenhaltungen:
- DE-U- 29 502 052
- DE-U- 29 812 947
- US-A- 4 892 429
- US-A- 5 885 041

## Beschreibung

Die Erfindung betrifft einen gewindefurchenden, hülsenförmigen Schraubdübel gemäss dem Oberbegriff des Patentanspruchs 1.

Zur Befestigung von Bauteilen an Untergründen, wie beispielsweise Beton, Stein, Ziegelmauerwerk und dergleichen, werden meist Dübel verwendet. Diese besitzen einen hülsenförmigen Dübelkörper, der in einer im Untergrund vorbereiteten Bohrung verankert wird, and Lastangriffsmittel die zur Festlegung des Bauteils mit dem eigentlichen Befestigungsmittel, beispielsweise einer Schraube, einem Bolzen oder dergleichen, zusammenwirken. Die Lastangriffsmittel sind meist Innengewinde, die in der Innenwandung des mit einer Bohrung versehenen, hülsenförmigen Dübelkörpers vorgesehen sind. Es können aber auch andere Arten von Lastangriffsmittel, beispielsweise Bajonettanschlüsse oder dergleichen formschlüssige Verbindungen, vorgesehen sein. Eine weitere Art von gebräuchlichen Lastangriffsmitteln sind beispielsweise auch steckbare Schnellverschlüsse und dergleichen. Die Verankerung der Dübel im Untergrund erfolgt meist durch radiales Aufweiten eines Spreizbereichs am in Setzrichtung vorderen Endabschnitt des Dübelkörpers. Dazu wird ein üblicherweise konischer Spreizkörper unter radialem Aufspreizen des Spreizbereichs in der Bohrung des hülsenförmigen Dübelkörpers verschoben. Der Spreizkörper kann innerhalb der Bohrung angeordnet sein und in die Bohrung vorgetrieben werden. Bei sogenannten Aussenkonusdübeln ist der Spreizkörper am vorderen Ende des Dübelkörpers festgeklemmt. Zum Verankern des Dübels im Untergrund wird der meist metallische, hülsenförmige Dübelkörper über den sich am Bohrlochgrund abstützenden Spreizkörper aus Metall getrieben. Dabei wird der Spreizbereich radial aufgeweitet.

Die Relativverschiebung zwischen dem hülsenförmigen Dübelkörper und dem konischen Spreizkörper erfolgt durch axiale Schläge, mit denen der Konus in der Bohrung vorgetrieben bzw. der Dübelkörper auf den Spreizkörper aufgetrieben wird. Durch den schlagenden Setzvorgang sind die beschriebenen Spreizdübel nicht für jeden Untergrund geeignet. In Ziegelmauerwerk, beispielsweise, kommt des durch die Wucht der axialen Schläge zu Beschädigungen des Ziegels. Danach ist keine sichere Verankerung mehr möglich. Aber auch in anderen Untergründen, beispielsweise in porösem Sandstein, kann es durch die axialen Schläge auf den Spreizkörper bzw. auf den hülsenförmigen Dübelkörper zu Beschädigungen kommen, die dazu führen, dass die geforderten Lastwerte nicht erreicht werden. Die kraftschlüssige Verankerung dieser Dübelgattung im Untergrund durch radiales Aufspreizen des Spreizbereichs des Dübelkörpers ist in vielen Anwendungsfällen nachteilig. Infolge der relativ hohen Spreizkräfte müssen vorgegebene Mindestrand- und Mindestachsabstände eingehalten werden, um die Sicherheit des Befestigungspunktes gewährleisten zu können. Dies schränkt die Möglichkeiten zur Befestigung von Bauteilen oft in unerwünschter Weise ein.

Da es oftmals zwingend erforderlich ist, Befestigungspunkte auch in geringeren Achs- und Randabständen zu erstellen, ist bei einer zweiten Gattung von Dübeln eine weitgehend spreizdruckfreie, formschlüssige Verankerung vorgesehen. Bei sogenannten Hinterschnittdübeln besteht die formschlüssige Verankerung darin, dass am Dübelkörper vorgesehene Spreizlappen in eine, meist in der Nähe des Bohrlochgrunds angebrachte, Hinterschneidung ausgestellt werden. Die Hinterschneidung muss zuvor gesondert, mit Hilfe von speziellen Hinterschnittgeräten im Bohrloch erstellt werden. Diese Art der Befestigungstechnik ist sehr zeit- und kostenaufwendig. Sie wird daher üblicherweise nur bei besonders sicherheitsrelevanten Befestigungen und insbesondere für Schwerstlastbefestigungen angewandt.

Aus dem Stand der Technik ist auch ein formschlüssig verankernder Dübel bekannt, der ohne die gesonderte Erstellung einer Hinterschneidung in der Bohrung im Untergrund auskommt. Dieser Dübel weist einen zylindrischen Dübelkörper auf, der mit einer axialen Durchgangsbohrung versehen ist. Ein Innengewinde dient als Lastangriffsmittel. An der Aussenwandung des Dübelkörpers sind Schneiden angeordnet, die sich nach Art eines Steilgewindes wendelförmig um den Dübelkörper winden. Die Steilheit der wendelartig verlaufenden Schneiden ist dabei derart gewählt, dass eine Schneide entlang ihrer gesamten Längserstreckung weniger als 720° des Dübelkörpers umschlingt. Mit anderen Worten ausgedrückt, windet sich die steilgewindeartige Schneide entlang ihrer gesamten Längserstreckung in weniger als zwei Windungen um die Aussenfläche des Dübelkörpers. Der Querschnitt der Schneiden ist im wesentlichen dreieckig. Eine in Setzrichtung vorlaufende Schneidflanke schliesst mit einer Senkrechten auf die Dübelachse einen grösseren Winkel ein als die nacheilende Schneidflanke. Die steile vorlaufende Flanke in Verbindung mit der grossen Steilheit der steilgewindeartig verlaufenden Schneiden soll gewährleisten, dass sich der Dübel beim Eintreiben in das Bohrloch durch axiale Schläge selbsttätig in die Bohrlochwandung gräbt und furchend einen Formschluss herstellt. Die flachere, nacheilende Schneidflanke soll den formschlüssig verankerten Dübel durch Selbsthemmung in der Bohrung sichern. Der Setzvorgang für diesen bekannten selbstschneidenden Dübel erfordert relativ starke axiale Schläge. Dadurch ist das Einsatzgebiet dieses Dübels begrenzt. Für Ziegelmauerwerk oder für weniger feste Untergründe ist der Dübel nicht einsetzbar, da durch die axialen Schläge beim Setzvorgang der Untergrund beschädigt werden kann. Dies hätte zur Folge, dass die geforderten Lastwerte nicht erreichbar sind. Die Sicherung des verankerten Dübels durch Selbsthemmung im Schneidgewindebereich erschwert seine Demontage, sollte dies erforderlich sein. Insbesondere besteht dabei die Gefahr, dass die Wandung der Bohrung beschädigt wird.

In der DE-U-295 02 052, der DE-U-298 12 947 und der US-A-4,892,429 sind Einschraubdübel für weiche Baustoffe beschrieben. Die Einschraubdübel sind selbstschneidend und werden one Vorbohren, direkt in Gasbeton, Gipskartonplatten, Holz oder Gips eingeschraubt. Dazu weisen Sie einen meist konischen Dübelkörper auf, an dessen Aussenwandung eine oder zwei gewindeartig umlaufende Schneiden angeordnet sind. Für den Angriff eines Setzwerkzeugs weisen die Dübelkörper am ihrem rückwärtigen Ende eine Aufnahme für ein Setzwerkzeug auf, mit dem das erforderliche Drehmoment für das schneidende Eindrehen in den weichen Baustoff aufgebracht wird. Eine zylindrische Bohrung im Dübelkörper erlaubt es, eine Befestigungsschraube in den Dübel einzudrehen. Dabei gräbt sich das Gewinde der Befestigunsschraube in die Wandung der Bohrung. In einer Variante dieser bekannten Befestigungselemente kann der Dübelkörper auch geschlitzt ausgebildet sein, damit er beim Einschrauben der Befestigungsschraube in den Dübelkörper aufgespreizt wird. Für Befestigungen in harten Untergründen, beispielsweise in Beton, Stein oder Ziegelmauerwerk, sind diese Einschraubdübel nicht geeignet.

Aus der den nächsten Stand der Technik bildenden US-A-5,885,041 ist ein Hybridanker für Verankerungen in harten Untergründen bekannt. Der zylindrische Körper des Hybridankers weist eine wendelartige Schneide auf, die sich über die Länge des zylindrischen Körpers erstreckt und von dessen Oberfläche abragt. Beim Einschrauben des Hybridankers in eine vorbereitete Aufnahmebohrung gräbt sich die Schneide in die Wandung des Bohrlochs. Ein Schraubenkopf am rückwärtigen Ende des Hybridankers dient als Eingriffsmittel zur Übertragung des für den Einschraubvorgang erforderlichen Drehmoments. Zusätzlich zu der formschlüssigen Verankerung wird der Hybridanker im Bohrloch durch einen chemischen Mörtel, beispielsweise auf Kunstharzbasis, befestigt. Im Bereich zwischen den Gewindegängen der Schneide ist der zylindrische Körper des Hybridankers gewindeartig profiliert. Die Profilierungen sollen die Verankerung des Hybridankers im chemischen Mörtel unterstützen. Der Durchmesser des zylindrischen Körpers im Bereich der gewindeartigen Profilierungen ist derart bemessen, dass zwischen den Profilierungen und der Bohrlochwandung ein Ringspalt frei bleibt, durch den der chemische Mörtel vor dem Aushärten zirkulieren kann. Eine Beschichtung des zylindrischen Körpers mit einem Trennmittel verhindert eine stoffschlüssige Verbindung mit dem Mörtel. Dadurch ist prinzipiell bei Bedarf ein Herausdrehen des Hybridankers möglich. Für ein wiederholtes Festschrauben und Wiederlösen des Befestigungspunktes ist der Hybridanker jedoch nicht geeignet.

Es ist daher Aufgabe der vorliegenden Erfindung, diesen Nachteilen der Dübel des Stands der Technik abzuhelfen. Es soll ein Dübel geschaffen werden, der Befestigungen mit kleinen Achsund Randabständen ermöglicht. Der Dübel soll in auch in bislang kritischen Untergründen, wie beispielsweise Ziegelmauerwerk, porösem Sandstein und dergleichen, Befestigungen mit zufriedenstellenden Lastwerten ermöglichen. Es sollen auch Befestigungen in der Zugzone ermöglicht sein. Beschädigungen des Untergrunds sollen vermieden werden. Der Setzvorgang für den Dübel soll auf einfache Art durchführbar sein und kein speziell ausgebildetes Setzwerkzeug erfordern. Bei Bedarf soll der Dübel auch auf einfache Art wieder demontierbar sein.

Die Lösung dieser Aufgaben besteht in einem Schraubdübel, welcher die im kennzeichnenden Abschnitt des Patentanspruchs 1 angeführten Merkmale aufweist. Besonders bevorzugte Ausführungsvarianten und/oder Weiterbildungen der Erfindung sind Gegenstand der abhängigen Ansprüche.

Der erfindungsgemässe gewindefurchende Schraubdübel besitzt einen im wesentlichen zylindrischen, hülsenformigen Dübelkörper mit einer axialen Bohrung und im Inneren des Dübelkörpers angeordneten Lastangriffsmitteln. An seiner Aussenfläche ist der Dübelkörper mit wenigstens einer Hauptschneide ausgestattet, die sich wendelförmig entlang eines Grossteils der Aussenfläche des Dübelkörpers windet und diese radial überragt. Die Hauptschneide umschlingt den Dübelkörper über ihre Längserstreckung in wenigstens drei Windungen. Zusätzlich zu den Lastangriffsmitteln sind im Inneren des Dübelkörpers Eingriffsmittel zur Übertragung eines Drehmoments vorgesehen.

Zum Unterschied von den aus dem Stand der Technik bekannten Dübeln besitzt der erfindungsgemässem Schraubdübel zusätzlich zur Hauptschneide zwei Hilfschneiden, die sich wendelartig über wenigstens 1,5 Windungen erstrecken. Somit weist die Dübelhülse wenigstens an einem Teilbereich ihrer Aussenfläche drei nebeneinander verlaufende Schneidenwindungen auf Die grössere Anzahl von Windungen führt dabei zu einem verbesserten Formschluss, indem eine grössere Anzahl radialen Überständen zum Halt des Dübels beiträgt. Die grössere Anzahl von Windungen, die sich in die Bohrungswandung einschneiden, erlaubt es, den erfindungsgemässen Schraubdübel auch in der Zugzone des Untergrunds, insbesondere von Beton, einzusetzen. Der Setzvorgang des Schraubdübels ist selbsterklärend und einfach zu bewerkstelligen. Bei Bedarf ist der Schraubdübel auch wieder einfach und schonend demontierbar, indem die Drehmomenteinwirkung umgekehrt wird.

Die Hauptschneide und die Hilfsschneiden besitzen an einem in Bezug auf die Setzrichtung vorderen Abschnitt des Dübelkörpers jeweils einen Gewindeeinlaufbereich. An den Gewindeeinlaufbereichen nimmt der radiale Überstand der Hauptschneide und der beiden. Hilfschneiden gegenüber der Aussenfläche des Dübelkörpers im wesentlichen auf Null ab. In einer vorteilhaften Ausführungsvariante sind die Gewindeeinlaufbereiche in einem Winkelabstand von etwa 120° voneinander auf dem selben Umfangskreis des Dübelkörpers angeordnet. Durch die Anordnung der Haupt- und Hilfsschneiden und durch die geometrische Ausgestaltung der Gewindeeinlaufbereiche ist die Zentrierung des Schraubdübels im Bohrloch verbessert. Dadurch kann die Hauptschneide besser in den Untergrund eingreifen, um beim drehenden Setzen des Schraubdübels selbsttätig ein Gewinde in die Bohgrungswandung zu schneiden. Die Hilfsschneiden können entlang der gesamten Länge des Dübelkörpers vorgesehen sein. Für ihre zentrierende Funktion reicht es jedoch aus, wenn sie sich über wenigstens 1,5 Windungen erstrecken. Danach können sie in der Aussenfläche des Dübelkörpers verlaufen. Damit die für den Setzvorgang erforderlichen Drehmomente gering gehalten werden können, erweist es sich von Vorteil, wenn die beiden Hilfsschneiden einen kleineren maximalen radialen Überstand über die Aussenwandung des Dübelkörpers aufweisen als die Hauptschneide. Die Steigungen der Hauptschneide und der Hilfsschneiden können gleich gross ausgebildet sein. In einer Variante der Erfindung, bei der die Hilfsschneiden zusätzliche Halte- und Verspannfunktionen erfüllen, können die Steigungen der beiden wendelartigen Hilfsschneiden auch von der Steigung der Hauptschneide verschieden sind. Diese Massnahme kann sich beispielsweise auf das für das Lösen des Schraubdübels erforderliche Rückdrehmoment vorteilhaft auswirken.

Die Eingriffsmittel zur Drehmomentübertragung an den Dübelkörper können im vorderen Dübelabschnitt vorgesehen sein. Um jedoch die Gefahr einer Beschädigung der Lastangriffsmittel möglichst zu beseitigen, sind die Eingriffsmittel im rückwärtigen Endbereich des Dübelkörpers vorgesehen. Dies ermöglicht es, Vorkehrungen zu treffen, mit denen einer unbeabsichtigen Beschädigung der im Innern des Dübelkörpers axial anschliessenden Lastangriffsmittel entgegengewirkt wird.

Für die Eingriffsmittel zur Drehmomentübertragung sind verschiedene Varianten möglich. Beispielsweise kann die Innenwandung des Dübelkörpers im rückwärtigen Endbereich mit axial verlaufenden Rillen versehen sein, die einander diametral gegenüberliegen und am rückwärtigen Ende des Dübelkörpers münden. In diese Rillen kann ein korrespondierend ausgebildetes, stabartiges Werkzug mit zwei radial abragenden Stiften eingeführt werden. In einer bevorzugten Ausführungsvariante der Erfindung sind die Eingriffsmittel im rückwärtigen Endebereich des Dübelkörpers als Einsteckabschnitt mit im wesentlichen polygonalem Querschnitt ausgebildet. Die Anzahl und die Grösse der Drehmomentübertragungsflächen gibt die lokalen Belastungen des Dübelkörpers bei der Drehmomentübertragung vor. Als zweckmässig erweist sich dabei insbesondere eine im wesentlichen viereckiger, vorzugsweise im wesentlichen quadratischer, Querschnitt des Einsteckabschnitts. Dies gewährleistet ausreichend grosse Drehmomentübertragungsflächen und genügend verbleibendes Material des Dübelkörpers, damit es bei Beanspruchung nicht zu Materialversagen im rückwärtigen Endbereich des Dübelkörpers kommt.

Für ein manuelles Versetzen kann bei geeigneter Dimensionierung des Einsteckabschnitts der Schraubdübel einfach auf den Vierkant des Ratschenhebels einer Steckschlüsselvorrichtung gesteckt werden. Der Schraubdübel tritt dabei an die Stelle einer Stecknuss. Der Setzvorgang entspricht dann weitgehend der Manipulation des Ratschhebels bei einem Schraubvorgang. Selbstverständlich ist der erfindungsgemässe Schraubdübel auch mit Hilfe eines Schraub- oder Drehbohrgerätes versetzbar. Dazu wird ein zu dem Einsteckabschnitt korrespondierendes Wellenstück in die Werkzeugaufnahme eingespannt und der Schraubdübel durch Betätigen des Gerätes in die Bohrung "eingeschraubt". Es versteht sich, dass im Fall der Verwendung von axialschlagunterstützten Drehbohrgeräten das Schlagwerk ausgeschaltet wird. Zur weiteren Erleichterung des maschinellen Versetzens des erfindungsgemässen Schraubdübels können sogar Schraubgeräte verwendet werden, die eine Schlagunterstützung in Eindrehrichtung aufweisen. Derartige Geräte sind auch unter der Bezeichung "Tangentialschlag-Schraubgeräte" bekannt.

Indem der Dübelkörper einen rückwärtigen Endbereich aufweist, dessen Aussendurchmesser sich zum rückwärtigen Ende hin erweitert, ist der erfindungsgemässe Schraubdübel in der vorbereiteten Bohrung verspannbar. Dies wirkt als zusätzliche Rückdrehsicherung für den versetzten Schraubdübel. Der grösste Aussendurchmesser im rückwärtigen Endbereich überschreitet dabei einen über die Schneidenwindungen gemessenen grössten Aussendurchmesser nicht. Abgesehen von der leichteren Versetzbarkeit des Schraubdübels hat diese Aussendurchmesserlimitierung auch fertigungstechnische Vorteile. Ein derart ausgebildeter Schraubdübel ist auch für eine Durchsteckmontage geeignet und insbesondere oberflächenbündig im Untergrund verankerbar. In einer abgewandelten Variante der Erfindung kann der Schraubdübel an seinem rückwärtigen Ende einen umlaufenden Ringbund bzw. einen Distanzkragen aufweisen. Dies erlaubt es, den Dübel mit einem definierten Überstand über den Untergrund zu versetzen.

Die Hauptschneide besitzt eine in Setzrichtung vorlaufende und eine nacheilende Flanke. Für den Schneidvorgang einerseits und für die bei Zugbelastung des Schraubdübels auftretenden Kräft erweist sich ein Winkel zwischen den vorlaufenden und den nacheilenden Flanken der radial am weitesten überstehenden Hauptschneide von Vorteil, der grösser als 8°, vorzugsweise grösser als 10° ist. Für den Schneidvorgang sind grössere Winkel von Vorteil. Andererseits werden zur Vermeidung von Spreizkräften bei Zugbelastung des Schraubdübels möglichst kleine Winkel angestrebt. Die angegebenen Untergrenze für den Winkel erweist sich dabei als zufriedenstellender Kompromisslösung, die einerseits beherrschbare Drehmomente und andererseits geringe Spreizkräfte garantiert.

Zur weiteren Erleichterung des Setzens des erfindungsgemässen Schraubdübels ist am Vorderende des Dübelkörpers ein Einführabschnitt vorgesehen, der einen kleineren Aussendurchmesser aufweist als der Dübelkörper im Bereich der wendelartig verlaufenden Schneide(n). Dieser durchmesserkleinere Bereich erleichtert das Ansetzen des Schraubdübels an die Bohrlochmündung, um mit dem Schneidvorgang zu beginnen. In einer vorteilhaften Variante der Erfindung ist der Einführabschnitt zum freien Vorderende hin konisch verjüngt ausgebildet. Dadurch wird beim Ansetzen an das Bohrloch die Zentrierung des Schraubdübels noch weiter verbessert.

Die Bohrung im Dübelkörper kann beispielsweise eine Durchgangsbohrung sein. Dies bietet die Möglichkeit, beispielsweise ein Innengewinde als Lastangriffsmittel bis zum vorderen Dübelende auszuführen. In einer alternativen Ausführungsvariante der Erfindung ist die Bohrung als Sacklochbohrung ausgebildet. Dies hat den Vorteil, dass das von den Schneiden von der Bohrlochwandung abgebaute Material nicht in den Bereich der Lastangriffsmittel gelangen kann.

Wie bereits eingangs erwähnt wurde, können die Lastangriffsmittel unterschiedlich ausgebildet sein. Besonders bewährt haben sich dabei aber insbesondere Innengewinde, beispielsweise metrische Gewinde oder Whitworthgewinde. Die Steigung des Innengewindes ist dabei kleiner ist als die Steigung der Hauptschneide an der Aussenwandung des Dübelkörpers. Dabei weisen das Innengewinde und die gewindearte(n) Schneide(n) den gleichen Drehsinn auf. Dies hat den Vorteil, dass beim Einschrauben einer Gewindeschraube in einen möglicherweise noch nicht vollständig festgelegten Schraubdübel, der Einschraubvorgang zur endgültigen Fixierung beiträgt. Die geringere Steigung des Innengewindes resultiert in geringeren erforderlichen Rückdrehmomenten zum Lösen der Gewindeschraube. Diese sind kleiner als das erforderliche Rückdrehmoment zum Lösen des im Untergrund verankerten Schraubdübels. Auf diese Weise wird einem unbeabsichtigten Lösen des Schraubdübels entgegengewirkt.

Während der erfindungsgemässe Schraubdübel für Befestigungen in sehr weichen Materialien im Prinzip auch aus Kunststoff gefertigt sein könnte, erweist es sich für den Einsatz des Schraubdübels insbesondere in harten Untergründen von Vorteil, wenn der Dübelkörper und die Schneiden aus Metall, beispielsweise aus einem rostfreien Stahl bestehen. Dadurch ist der Schraubdübel korrosionsbeständig und insbesondere auch brandschutztauglich. Aus fertigungstechnischen Gründen, aber auch aus Festigkeitsüberlegungen sind die Hauptschneide und ggf. die Hilfsschneiden mit Vorteil einstückig mit dem Dübelkörper ausgebildet. Dabei können die Hilfsschneiden bereits in den Dübelkörper-Rohling eingerollt sein, während die Hauptschneide in einem nachfolgenden Formgebungsprozess erstellt wird.

Im folgenden wird die Erfindung anhand eines in den Fig. dargestellten Ausführungsbeispiels näher erläutert. Es zeigen in schematischer, nicht massstabsgetreuer Darstellung:
- Fig. 1: einen erfindungsgemässen Schraubdübel in halbseitig geschnittener Darstellung; und
- Fig. 2: eine Draufsicht auf das rückwärtige Stirnende des Schraubdübels.

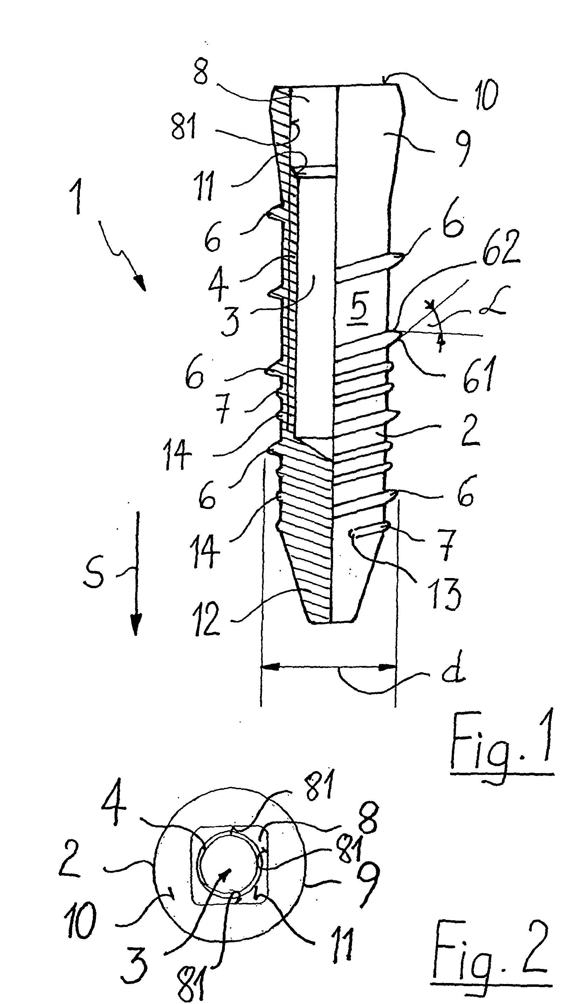

Das in Fig. 1 und 2 schematisch dargestellte Ausführungsbeispiel des erfindungsgemässen Schraubdübels trägt gesamthaft das Bezugszeichen 1. Der Schraubdübel 1 besitzt einen hülsenförmigen, im wesentlichen zylindrischen Dübelkörper 2 mit einer Sacklochbohrung 3. In der Sacklochbohrung 3 ist ein Innengewinde 4 ausgebildet, das als Lastangriffsmittel beispielsweise für einen Schraubbolzen dient. Der Dübelkörper 2 besitzt einen rückwärtigen Endabschnitt 9 mit einem als Einsteckabschnitt 8 ausgebildeten Eingriffsmittel. Der Einsteckabschnitt 8 besitzt Drehmomentübertragungsflächen 81 zur Drehmomentübertragung. Im dargestellten Ausführungsbeispiel ist der Einsteckabschnitt 8 mit einem im wesentlichen quadratischen Querschnitt mit vier gleichen Drehmomentübertragungsflächen 81 ausgebildet. Die lichte Weite des Einsteckabschnitts 8 ist grösser als der Durchmesser der Bohrung 3 mit dem Innengewinde 4. Dadurch ergibt sich am Übergang vom Einsteckabschnitt 8 zum Innengewinde 4 ein beispielsweise konusringförmig umlaufender Anschlag 11. Dieser verhindert, dass beim Ankuppeln des Schraubdübels an ein korrespondierend zum Einsteckabschnitt ausgebildeten Kupplungsstück der Gewindeeinlauf des Innengewindes 4 beschädigt wird. Das Kupplungsstück kann beispielsweise ein Vierkant an der Ratsche eines Steckschlüsselwerkzeuges oder eine in die Werkzeugaufnahme eines Schraub- oder Drehbohrgerätes einspannbare Vierkantwelle sein.

An der Aussenfläche 5 des Dübelkörpers verlaufen wendelartig eine Hauptschneide 6 und zwei Hilfsschneiden 7, 14. Die wendelartig verlaufende Hauptsschneide 6 erstreckt sich vom rückwärtigen Endabschnitt zu einem Einführabschnitt 12 am in Setzrichtung S vorderen Ende des Dübelkörpers 2. Dabei umschlingen die Hauptschneide 6 den Dübelkörper in wenigstens drei Windungen. Im dargestellten Fall sind es beispielsweise vier Windungen, woraus sich ein Gesamtumschlingungswinkel von 4 x 360° = 1440° ergibt. Die Hilfsschneiden 7, 14 erstrecken sich über wenigstens 1,5 Windungen. Sie können bis zum rückwärtigen Ende geführt sein oder, wie dargestellt, nach der Mindestzahl Windungen in der Aussenfläche 5 des Dübelkörpers 2 auslaufen. Die Hilfsschneiden weisen einen kleineren maximalen radialen Überstand über die Aussenfläche 5 des Dübelkörpers 2 auf als die Hauptschneide. Der Unterschied des maximalen radialen Überstands der drei wendelartig verlaufenden Schneiden beträgt beispielsweise etwa 0,5 mm bis etwa 2,5 mm. Das Prinzip dieser Art von Hi-Lo Mehrfachschneiden ist aus dem Stand der Technik bekannt und findet beispielsweise auch bei sogenannten Betonschrauben Verwendung, die direkt in vorgebohrte Bohrungen in Beton eingetrieben werden. Die wendelartig verlaufende Schneide 6 mit dem grösseren radialen Überstand besitzt eine in Setzrichtung vorlaufende Schneidflanke 61 und eine nacheilende Schneidflanke 62. Die beiden Schneidflanken 61, 62 schliessen miteinander einen Winkel α ein, der grösser ist als 8°, vorzugsweise grösser als 10°. Dabei ist der Winkel α der Schneidflanken 61, 62 kleiner als 105°, bevorzugt kleiner als 90°. Der grösste radiale Überstand der wendelartig verlaufenden Schneide 6 beträgt beispielsweise etwa 1,5 mm bis etwa 4 mm.

Die Hauptschneide 6 und die Hilfsschneiden 7, 14 weisen an einem in Bezug auf die Setzrichtung S vorderen Abschnitt des Dübelkörpers 2 jeweils Gewindeeinlaufbereiche 13 auf. An den Gewindeeinlaufbereichen 13 nimmt der radiale Überstand der Hauptschneide 6 und der beiden Hilfschneiden 7, 14 gegenüber der Aussenfläche 5 des Dübelkörpers 2 im wesentlichen auf Null ab. Dabei sind die Gewindeeinlaufbereiche 13 in einem Winkelabstand von etwa 120° voneinander auf dem selben Umfangskreis des Dübelkörpers 2 angeordnet.

Der an den mit den wendelartigen Haupt- und Hilfsschneiden 6, 7, 14 versehenen Teil des Dübelkörpers 2 anschliessende Einführabschnitt 12 verjüngt sich im wesentlichen konisch zum Vorderende des Schraubdübels 1. Der rückwärtige Endabschnitt 9 des Dübelkörpers 2 erweitert sich etwa konisch vom Auslaufbereich der Hauptschneide 6 zur rückwärtigen Stirnfläche 10.

Dabei überschreitet er aber einen grössten Aussendurchmesser d, der durch den grössten radialen Überstand der Schneiden 6 vorgegeben ist, nicht. Der Einführabschnitt 12 und der rückwärtige Endabschnitt 9 des Dübelkörpers 2 weisen etwa vergleichbare Längen auf. Diese beträgt beispielsweise etwa 8 mm bis etwa 15 mm oder etwa 1/5 der Gesamtlänge des Schraubdübels 1. Der Drehsinn der wendelartig verlaufenden Haupt- und Hilfsschneiden 6, 7, 14 und des Innengewindes 4 ist mit Vorteil gleich. Üblicherweise handelt es sich dabei um ein Rechtsgewinde. Das Innengewinde 4 kann ein metrisches Gewinde oder ein Whitworthgewinde sein. Der Dübelkörper 2 des beispielsweise dargestellten Ausführungsbeispiels des Schraubdübels besteht aus Metall, beispielsweise aus einem rostfreien Stahl. Die Schneiden 6, 7, 14 sind einstückig mit dem Dübelkörper 2 ausgebildet und können insbesondere im Spitzenbereich zusätzlich gehärtet sein. Als Herstellungsverfahren für einen erfindungsgemässen Schraubdübel aus Metall kommen beispielsweise spanende Verfahren, Rollwalzverfahren, insbesondere für die Hilfsschneiden, oder auch Fliesspressverfahren in Frage. Erfindungsgemäss ausgebildete Schraubdübel aus Kunststoff werden bevorzugt in einem massentechnischen Spritzgiessverfahren herstellt.

## Patentansprüche

1. Schraubdübel zur Verankerung in Beton, Stein, Ziegelmauerwerk und dergleichen mit einem im wesentlichen zylindrischen Dübelkörper (2), der an seiner Aussenfläche (5) mit wenigstens einer Hauptschneide (6) ausgestattet ist, die sich in wenigstens drei Windungen wendelförmig entlang eines Grossteils der Aussenfläche (5) des Dübelkörpers (2) erstreckt und diese radial überragt, und Eingriffsmittel (8,81) zur Übertragung eines Drehmoments an den Dübelkörper (2) aufweist, **dadurch gekennzeichnet, dass** der Dübelkörper (2) eine axiale Bohrung (3) und im Inneren des Dübelkörpers (2) angeordnete Lastangriffsmittel (4) aufweist, und dass an der Aussenwandung (5) des Dübelkörpers (2) zwei Hilfsschneiden (7,14) vorgesehen sind, die sich wendelartig entlang des Dübelkörpers (2) erstrecken und diesen in wenigstens 1,5 Windungen umschlingen.

2. Schraubdübel nach Anspruch 1, **dadurch gekennzeichnet, dass** die Hauptsschneide (6) und die Hilfsschneiden (7,14) an einem in Setzrichtung (S) vorderen Abschnitt des Dübelkörpers (2) Gewindeeinlaufbereiche (13) aufweisen, an denen ihr radialer Überstand gegenüber der Aussenfläche (5) des Dübelkörpers (2) im wesentlichen auf Null abnimmt, und dass die Gewindeeinlaufbereiche (13) in einem Winkelabstand von etwa 120° voneinander auf dem selben Umfangskreis des Dübelkörpers (2) angeordnet sind.

3. Schraubdübel nach Anspruch 1 oder 2, **dadurch gekennzeichnet, dass** die Eingriffsmittel (8, 81) im rückwärtigen Endbereich (9) des Dübelkörpers (2) vorgesehen sind.

4. Schraubdübel nach einem der Ansprüche 1 bis 3, **dadurch gekennzeichnet, dass** die Eingriffsmittel (8, 81) zur Drehmomentübertragung im Inneren des Dübelkörpers (2) angeordnet sind.

5. Schraubdübel nach Anspruch 4, **dadurch gekennzeichnet, dass** die Eingriffsmittel (8, 81) als Einsteckabschnitt ausgebildet sind und einen im wesentlichen polygonalen Querschnitt aufweisen.

6. Schraubdübel nach Anspruch 5, **dadurch gekennzeichnet, dass** der Einsteckabschnitt (8) einen im wesentlichen viereckigen, vorzugsweise im wesentlichen quadratischen, Querschnitt aufweist.

7. Schraubdübel nach einem der vorangehenden Ansprüche, **dadurch gekennzeichnet, dass** der Dübelkörper (2) einen rückwärtigen Endbereich (9) aufweist, der sich zum rückwärtigen Stirnende (10) hin auf einen Aussendurchmesser erweitert, der einen über die Windungen der Hauptschneide (6) gemessenen grössten Aussendurchmesser (d) nicht überschreitet.

8. Schraubdübel nach einem der vorangehenden Ansprüche, **dadurch gekennzeichnet, dass** die beiden Hilfsschneiden (7,14) einen kleineren maximalen radialen Überstand über die Aussenwandung (5) des Dübelkörpers (2) aufweisen als die Hauptschneide (6).

9. Schraubdübel nach einem der vorangehenden Ansprüche, **dadurch gekennzeichnet, dass** die beiden wendelartigen Hilfsschneiden (7,14) Steigungen aufweisen, die von der Steigung der Hauptschneide (6) verschieden sind.

10. Schraubdübel nach einem der vorangehenden Ansprüche, **dadurch gekennzeichnet, dass** die Hauptschneide (6) eine in Setzrichtung vorlaufende und eine nacheilende Flanke aufweist, wobei die vorlaufende und die nacheilende Flanke (61, 62) der Schneide (6) miteinander einen Winkel (α) einschliessen, der grösser als 8°, vorzugsweise grösser als 10° ist.

11. Schraubdübel nach einem der vorangehenden Ansprüche, **dadurch gekennzeichnet, dass** am Vorderende des Dübelkörpers (2) ein Einführabschnitt (12) vorgesehen ist, der einen kleineren Aussendurchmesser aufweist als der Dübelkörper (2) im Bereich der wendelartigen Schneide(n) (6, 7,14).

12. Schraubdübel nach Anspruch 11, **dadurch gekennzeichnet, dass** der Einführabschnitt (12) zum freien Vorderende hin konisch verjüngt ausgebildet ist.

13. Schraubdübel nach einem der vorangehenden Ansprüche, **dadurch gekennzeichnet, dass** die Bohrung (3) im Dübelkörper (2) eine Sacklochbohrung ist.

14. Schraubdübel nach einem der vorangehenden Ansprüche, **dadurch gekennzeichnet, dass** die Lastangriffsmittel (4) als Innengewinde, beispielsweise als metrisches Gewinde oder als Whitworthgewinde, ausgebildet sind, wobei die Steigung des Innengewindes kleiner ist als die Steigung der Hauptschneide (6) an der Aussenwandung (5) des Dübelkörpers (2).

15. Schraubdübel nach einem der vorangehenden Ansprüche, **dadurch gekennzeichnet, dass** der Dübelkörper (2) und die Schneide(n) (6, 7,14) aus Metall, beispielsweise aus einem rostfreien Stahl bestehen.

16. Schraubdübel nach einem der vorangehenden Ansprüche, **dadurch gekennzeichnet, dass** die Schneide(n) (6, 7, 14) einstückig mit dem Dübelkörper (2) ausgebildet sind.

17. Schraubdübel nach einem der Ansprüche 6 -16, **dadurch gekennzeichnet, dass** die Hilfsschneiden (7,14) in die Aussenfläche (5) des Dübelkörpers (2) eingerollt sind.

## Claims

1. Screwed dowel for anchoring in concrete, stone, brick masonry and the like with an essentially cylindrical dowel body (2) which is equipped with at least one primary cutting edge (6) on its outer face (5) which extends helically along a majority of the outer face (5) of the dowel body (2) in at least three windings and protrudes radially past it, and has engagement means (8, 81) for transmitting a torque to the dowel body (2),
**characterized in that** the dowel body (2) has an axial bore (3) and load engagement means (4) disposed in the interior of the dowel body (2) and that two auxiliary cutting edges (7, 14) are provided on the outer wall (5) of the dowel body (2) which extend helically along the dowel body (2) and wrap around it in at least 1.5 windings.

2. Screwed dowel according to claim 1, **characterized in that** the primary cutting edge (6) and the auxiliary cutting edges (7, 14) on a front portion of the dowel body (2) in the setting direction (S), have thread onset regions (13), at which their radial protrusion relative to the outer face (5) of the dowel body (2) decreases substantially to zero and that the thread onset regions (13) are disposed at an angular spacing of approximately 120° from one another on the same circumferential circle of the dowel body (2).

3. Screwed dowel according to either claim 1 or 2, **characterized in that** the engagement means (8, 81) are provided in the rearward end region (9) of the dowel body (2).

4. Screwed dowel according to any of claims 1 to 3, **characterized in that** the engagement means (8, 81) are disposed for transmitting torque in the interior of the dowel body (2).

5. Screwed dowel according to claim 4, **characterized in that** the engagement means (8, 81) are embodied as an insert portion and have a substantially polygonal cross section.

6. Screwed dowel according to claim 5, **characterized in that** the insert portion (8) has a substantially rectangular, preferably substantially quadrilateral cross section.

7. Screwed dowel according to any of the preceding claims, **characterized in that** the dowel body (2) has a rearward end region (9), which widens, toward the rear face end (10), to an outside diameter which does not exceed a maximum outside diameter (d), measured across the windings of the primary cutting edge (6).

8. Screwed dowel according to any of the preceding claims, **characterized in that** the two auxiliary cutting edges (7, 14) have a lesser maximum radial projection past the outer wall (5) of the dowel body (2) than the primary cutting edge (6).

9. Screwed dowel according to any of the preceding claims, **characterized in that** the two helical auxiliary cutting edges (7, 14) have pitches that differ from the pitch of the primary cutting edge (6).

10. Screwed dowel according to any of the preceding claims, **characterized in that** the primary cutting edge (6) has one leading and one trailing edge in the setting direction, the leading and the trailing edges (61, 62) of the cutting edge (6) forming an angle (α) with one another that is greater than 8°, preferably greater than 10°.

11. Screwed dowel according to any of the preceding claims, **characterized in that** on the front end of the dowel body (2) an introduction portion (12) is provided which has a smaller outside diameter than the dowel body (2) in the region of the helical cutting edge (s) (6, 7, 14).

12. Screwed dowel according to claim 11, **characterized in that** the introduction portion (12) is embodied such that it tapers conically toward the free front end.

13. Screwed dowel according to any of the preceding claims, **characterized in that** the bore (3) in the dowel body (2) is a blind bore.

14. Screwed dowel according to any of the preceding claims, **characterized in that** the load engagement means (4) are embodied as female threads, for instance as a metric thread or a Whitworth thread, the pitch of the female thread being less than the pitch of the primary cutting edge (6) on the outer wall (5) of the dowel body (2).

15. Screwed dowel according to any of the preceding claims, **characterized in that** the dowel body (2) and the cutting edge(s) (6, 7, 14) consist of metal, for instance a stainless steel.

16. Screwed dowel according to any of the preceding claims, **characterized in that** the cutting edge(s) (6, 7, 14) is/are embodied integrally with the dowel body (2).

17. Screwed dowel according to any of claims 6 - 16, **characterized in that** the auxiliary cutting edges (7, 14) are rolled into the outer face (5) of the dowel body (2).

## Revendications

1. Cheville à visser pour l'ancrage dans le béton, la pierre, la brique et similaires, avec un corps de cheville substantiellement cylindrique (2), qui est muni sur sa face extérieure (5) d'au moins un taillant principal (6) s'étendant sur au moins trois tours de façon hélicoïdale suivant une grande partie de la face extérieure (5) du corps de cheville (2) et la dépassant radialement et présentant des moyens d'engagement (8, 81) pour transmettre un couple de rotation au corps de cheville (2), **caractérisée en ce que** le corps de cheville (2) présente un alésage axial (3) et des moyens d'application de charge (4) disposés à l'intérieur du corps de cheville (2), et **en ce que** sur la paroi extérieure (5) du corps de cheville (2), deux taillants secondaires (7, 14) sont prévus qui s'étendent de façon hélicoïdale suivant le corps de cheville (2) et l'enlacent sur au moins 1,5 tours.

2. Cheville à visser selon la revendication 1, **caractérisée en ce que** le taillant principal (6) et les taillants secondaires (7, 14) présentent dans une section du corps de cheville (2), à l'avant dans la direction de pose (S), des zones d'entrée de filet (13) dans lesquelles leur dépassement radial par rapport à la face extérieure (5) du corps de cheville (2) diminue substantiellement jusqu'à zéro, et **en ce que** les zones d'entrée de filet (13) sont disposées à une distance angulaire d'environ 120° l'une de l'autre sur la même circonférence du corps de cheville (2).

3. Cheville à visser selon la revendication 1 ou 2, **caractérisée en ce que** les moyens d'engagement (8, 81 ) sont prévus dans la zone d'extrémité arrière (9) du corps de cheville (2).

4. Cheville à visser selon l'une quelconque des revendications 1 à 3, **caractérisée en ce que** les moyens d'engagement (8, 81) pour la transmission du couple de rotation sont disposés à l'intérieur du corps de cheville (2).

5. Cheville à visser selon la revendication 4, **caractérisée en ce que** les moyens d'engagement (8, 81) sont réalisés comme une section d'emboîtement et présentent une section transversale substantiellement polygonale.

6. Cheville à visser selon la revendication 5, **caractérisée en ce que** la section d'emboîtement (8) présente une section transversale substantiellement rectangulaire, de préférence substantiellement carrée.

7. Cheville à visser selon l'une quelconque des revendications précédentes, **caractérisée en ce que** le corps de cheville (2) présente une zone d'extrémité arrière (9) qui s'élargit en direction de l'extrémité frontale arrière (10) jusqu'à un diamètre extérieur qui ne dépasse pas un diamètre extérieur maximal (d) mesuré sur les tours du taillant principal (6).

8. Cheville à visser selon l'une quelconque des revendications précédentes, **caractérisée en ce que** les deux taillants secondaires (7, 14) présentent un dépassement radial maximal de la paroi extérieure (5) du corps de cheville (2) plus petit que le taillant principal (6).

9. Cheville à visser selon l'une quelconque des revendications précédentes, **caractérisée en ce que** les deux taillants secondaires de type hélicoïdal (7, 14) présentent des pas qui diffèrent du pas du taillant principal (6).

10. Cheville à visser selon l'une quelconque des revendications précédentes, **caractérisée en ce que** le taillant principal (6) présente un flanc avançant dans la direction de pose et un flanc retardant, le flanc avançant et le flanc retardant (61, 62) du taillant (6) formant ensemble un angle (α) supérieur à 8°, de préférence supérieur à 10°.

11. Cheville à visser selon l'une quelconque des revendications précédentes, **caractérisée en ce qu'**à l'extrémité avant du corps de cheville (2), une section d'introduction (12) est prévue qui présente un diamètre extérieur plus petit que le corps de cheville (2) au niveau du ou des taillants de type hélicoïdal (6, 7,14).

12. Cheville à visser selon la revendication 11, **caractérisée en ce que** la section d'introduction (12) est réalisée de façon effilée en direction de l'extrémité avant libre.

13. Cheville à visser selon l'une quelconque des revendications précédentes, **caractérisée en ce que** l'alésage (3) dans le corps de cheville (2) est un alésage borgne.

14. Cheville à visser selon l'une quelconque des revendications précédentes, **caractérisée en ce que** les moyens d'application de charge (4) sont réalisés comme un taraudage, par exemple comme un filet au pas métrique ou un filet Whitworth, le pas du taraudage étant inférieur au pas du taillant principal (6) au niveau de la paroi extérieure (5) du corps de cheville (2).

15. Cheville à visser selon l'une quelconque des revendications précédentes, **caractérisée en ce que** le corps de cheville (2) et le ou les taillants (6, 7, 14) sont réalisés en métal, par exemple en acier inoxydable.

16. Cheville à visser selon l'une quelconque des revendications précédentes, **caractérisée en ce que** le ou les taillants (6, 7, 14) sont réalisés de façon solidaire avec le corps de cheville (2).

17. Cheville à visser selon l'une quelconque des revendications 6 à 16, **caractérisée en ce que** les taillants secondaires (7, 14) sont enroulés dans la face extérieure (5) du corps de cheville (2).
